# EUROPÄISCHE PATENTSCHRIFT

(11) **EP 2 072 105 B1**
(45) Veröffentlichungstag und Bekanntmachung des Hinweises auf die Patenterteilung: **11.04.2012**
(21) Anmeldenummer: 08169776.5
(22) Anmeldetag: 24.11.2008
(51) Int. Cl.: B01D 46/00, B01D 46/52

(54) **Verfahren zur Herstellung eines keramischen Filterelements**
Method of producing a ceramic filter element
Procédé de fabrication d'un élément de filtre céramique

(30) Priorität: 21.12.2007 DE 102007062832
(43) Veröffentlichungstag der Anmeldung: 24.06.2009
(73) Patentinhaber: MANN+HUMMEL GmbH, 71638 Ludwigsburg (DE)
(72) Erfinder: Otterbach, Sabine, 74321 Bietigheim-Bissingen (DE)

(56) Entgegenhaltungen:
- EP-A- 1 666 123
- DE-A1-102005 028 713

## Beschreibung

### Technisches Gebiet

Die Erfindung betrifft ein Verfahren zur Herstellung eines keramischen Filterelements in einem Abgasfilter einer Brennkraftmaschine.

### Stand der Technik

In Patent Abstracts of Japan JP 63134020 A wird ein keramisches Filterelement für einen Abgasfilter in einer Brennkraftmaschine beschrieben, das aus einer gewellten, spiralförmig aufgewickelten Filterbahn aufgebaut ist. Zur Herstellung der Filterbahn werden hitzeresistente, anorganische Fasern in einer wässrigen Suspension mit Keramikpulver vermischt und zu einer Bahn verarbeitet. Mehrere übereinander liegende Bahnen werden zu der gewünschten Form des Filterkörpers zusammengerollt, wobei zwischen benachbarten Filterbahnen wabenförmige Strömungskanäle gebildet sind. Der Filterkörper wird anschließend bei hoher Temperatur gebrannt.

Die WO 2006/005668 offenbart ein Verfahren zur Herstellung eines keramischen Filterelements in einem Abgasfilter für Brennkraftmaschinen. Hierbei wird zunächst eine brennbare, nicht-keramische Trägerbahn mit einem keramischen Schlicker getränkt und anschließend in der gewünschten geometrischen Form soweit ausgebrannt, bis die Trägerbahn verbrannt und ein starrer Filterkörper gebildet ist.
Aus der DE 10 2005 028 713 A1 ist ein Verfahren zur Herstellung eines keramischen Filterelements in einem Abgasfilter für Brennkraftmaschinen bekannt, bei dem zunächst eine brennbare, nicht keramische Trägerbahn mit einem keramischen Schlicker getränkt und anschließend in der gewünschten geometrischen Form so weit ausgebrannt wird, bis die Trägerbahn verbrannt und ein starrer Filterkörper gebildet ist.

Nachteilig an diesen Verfahren sind zum einen der verhältnismäßig hohe Aufwand, und zum anderen die Tatsache, dass bei den herkömmlichen Verfahren Falten und Wellen entstehen, die in den Bauteilen Risse verursachen können.

Weiterhin nachteilig ist, dass mit den herkömmlichen Verfahren keine gezielten Hohlräume in das herzustellende Bauteil eingebracht werden können.

Es besteht folglich ein Bedarf, keramische Filterelemente zu schaffen, die
die geschilderten Nachteile des Standes der Technik vermeiden.

### Offenbarung der Erfindung

Es ist daher die Aufgabe der vorliegenden Erfindung, ein Verfahren zur Herstellung eines keramischen Filterelements in einem Abgasfilter einer Brennkraftmaschine bereitzustellen, das die Rissbildung in dem Filterelement weitestgehend vermeidet.

Es ist eine weitere Aufgabe der vorliegenden Erfindung, ein solches Verfahren bereitzustellen, dass eine gezielte Einbringung von Hohlräumen in das Filterelement gestattet.

Diese und weitere Aufgaben werden durch das Verfahren zur Herstellung eines keramischen Filterelements nach Anspruch 1 gelöst.

### Kurze Beschreibung der Zeichnungen

Die Erfindung wird im Folgenden anhand der Zeichnungen näher erläutert. Dabei zeigen:
Fign. 1A , 1B im Teilschnitt einen erfindungsgemäßen zylindrischen Filterkörper mit wechselseitig verschlossenen Strömungskanälen nach Aufbringen der brennbaren Dichtspur;
Fig. 2 einen erfindungsgemäßen zylindrischen Filterkörper nach dem Einbringen der Keramikverschlussmasse; und
Fign. 3A, 3B im Teilschnitt einen erfindungsgemäßen zylindrischen Filterkörper nach dem Ausbrennen der brennbaren Dichtspur.

### Ausführungsform(en) der Erfindung

Wabenförmige Keramikfilterelemente besitzen eine hervorragende Hitzebeständigkeit und werden demnach als Katalysatorträger für Automobilabgase und als Filter zum Einfangen von Ruß im Abgas eines Dieselmotors verwendet.

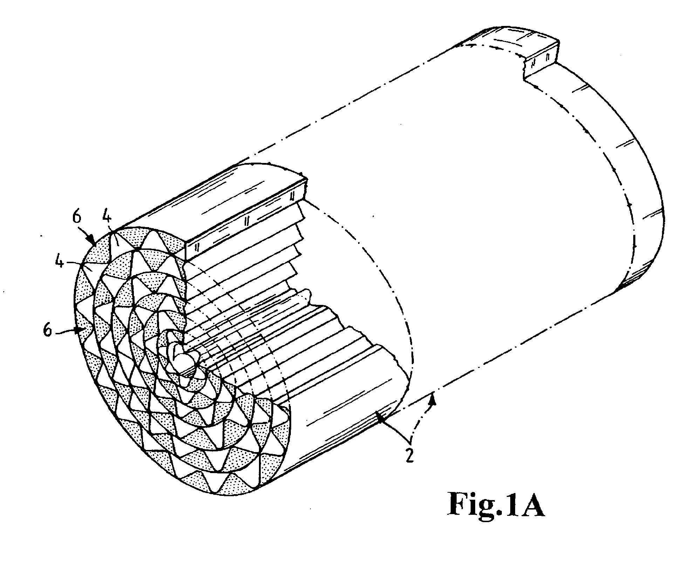

Um einen Filterkörper mit im Querschnitt wabenförmiger Struktur zu schaffen, bei dem in Achsrichtung des Filterkörpers Strömungskanäle für das zu reinigende Abgas gebildet sind, können zwei übereinander liegende Trägerbahnen miteinander verbunden bzw. verklebt werden, wobei mindestens eine der beiden Trägerbahnen geriffelt oder gewellt ist, um die besagten Strömungskanäle auszubilden (Halbzeugherstellung). Die Trägerbahnen sind vorzugsweise als Papierbahnen ausgeführt und bestehen aus Cellulose. Es kommen aber auch sonstige organische und anorganische Substanzen, die brennbar sind, in Frage. Die beiden übereinanderliegenden Trägerbahnen können auf einer Wickelmaschine zu einem etwa zylindrischen Filterkörper aufgerollt werden, der einen Wickelfilter 2 bildet (vgl. Fig. 1A). Selbstverständlich sind auch andere geometrische Formen und Figuren möglich.

Damit das Abgas den Filterkörper radial durchströmen kann, werden die Strömungskanäle 4 an einer Stirnseite des Filterelements 2 verschlossen, was üblicherweise mit einem keramischen, d.h., nicht brennbaren Kleber durchgeführt wird, der zwischen den aufeinander liegenden Trägerbahnen im Bereich der einen Stirnseite der Strömungskanäle aufgebracht wird. Der keramische Kleber härtet mit dem Ausbrennen aus und verbleibt als Pfropfen im stirnseitigen Abschnitt der Strömungskanäle. Nachteilig dabei ist, dass durch das frühzeitige Auftragen des Keramikschlickers die Keramikpluggingmasse austrocknen und brechen kann. Dann muss u.U. erneut Schlicker eingebracht werden. Des Weiteren kann beim Auftrag das Papier der Trägerbahn quellen, wobei Wellen entstehen, die ebenfalls Risse verursachen können.

Um vor dem Ausbrennen übereinander liegende Trägerbahnen in Form zu halten, kann es vorteilhaft sein, diese mittels eines Klebers zu fixieren, der beim Aushärten zumindest weitestgehend rückstandslos verbrennt. Als Klebstoff kommt hierfür beispielsweise ein polymerer Kleber in Betracht. Wichtig dabei ist, dass sich die Materialien von Dichtspur und Keramiklösung nicht gegenseitig zerstören und nur der Brand/das Sintern die ausbrennbare Dichtspur beseitigt.

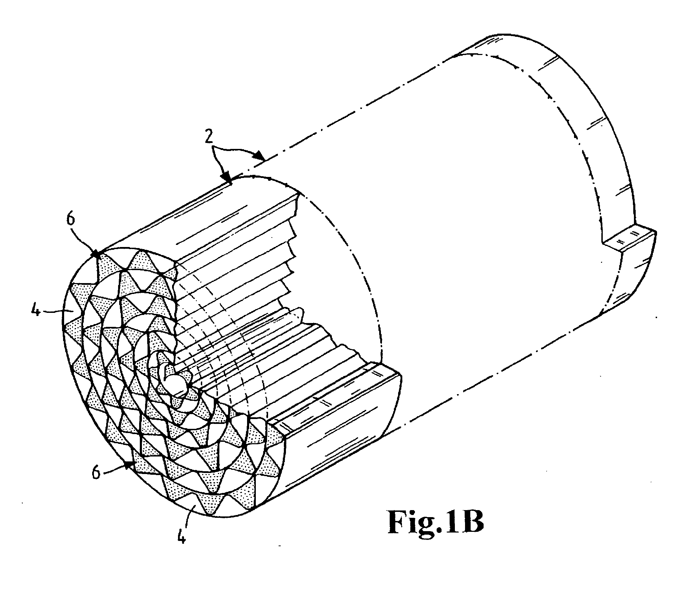

Bei der erfindungsgemäßen Herstellung des Wickelfilters 2 wird nun, wie in den Fign. 1A und 1B gezeigt, bei der Halbzeugherstellung eine brennbare Dichtspur 6 derart auf die brennbare, nicht-keramische Trägerbahn aufgebracht, dass die Strömungskanäle 4 wechselseitig durch die Dichtspur 6 verschlossen werden. Die brennbare Dichtspur 6 wird dabei auf beiden Seiten der nicht-keramischen, brennbaren Trägerbahn - zum Verschließen der Kanäle bevorzugt an deren äußerem Rand - wechselseitig aufgetragen, d.h., auf der einen Seite (Fig. 1A) der Trägerbahn zwischen der flachen und der gewellten oder geriffelten Lage bei der Halbzeugherstellung und auf der gegenüberliegenden Seite (Fig. 1 B) auf die gewellte oder geriffelte Lage bei der Wickelherstellung, so dass nach dem Aufwickeln die Kanäle 4 wechselseitig verschlossen sind, wie es in den Fign. 1A und 1B gezeigt ist (Vorder- und Rückseite).

Die brennbare Dichtspur 6 kann dabei bspw. aus Polyurethan (PU), Silikon, Kautschuk, Silikonharzen, Polyethylenen und dgl. bestehen. Die Breite der brennbaren Dichtspur kann beliebig sein und beträgt vorzugsweise ungefähr 3 mm bis ca. 10 mm, mehr vorzugsweise 3 bis ca. 5 mm. Die Dichtspur 6 beginnt am Wickelanfang und endet am Wickelende. Die Kanäle können beliebig mit Keramikpluggingmasse befüllt werden. Bei anderen geometrischen Formen ist es natürlich auch möglich, die Dichtspur anders aufzutragen. Selbstverständlich ist es auch möglich, weitere brennbare Dichtspuren im Inneren der Trägerbahn aufzubringen, um es so zu ermöglichen, gezielt Hohlräume ins Innere des Filterelements einzubringen. Selbstverständlich ist es auch möglich, weitere brennbare Dichtspuren im Innern oder auch am/im Kern des Wickels aufzubringen, um es zu ermöglichen, gezielt Hohlräume ins Innere oder am Kern des Filterelements einzubringen.

Im Falle eines Bauteils, bei dem im Innern Löcher benötigt werden, können bei der Wickel- und Halbzeugherstellung bereits "Dichtspur"-Punkte, die später die Löcher bilden sollen, aufgetragen werden. Diese Punkte sind niederviskos (dünnflüssiger) und dringen so besser in das Papier oder das gewählte Material ein.

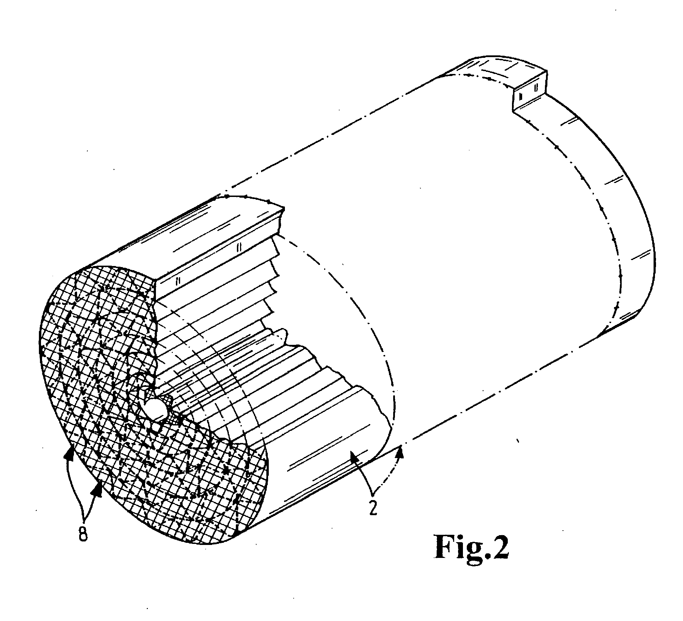

Nach dem Aufbringen der Dichtspur(en) 6 wird der Papierwickel in eine Keramikpluggingmasse 8 eingetaucht oder -gedrückt, je nach Konsistenz der Pluggingmasse. Es ist auch möglich, die Keramikpluggingmasse auf andere Weise in die Kanäle einzubringen, bspw. durch Pressen, Tauchen, Spritzen, Tränken, Gießen und dgl.. Anschließend wird der Wickel mit einem Keramikschlicker getränkt, getrocknet und gesintert. Als keramisches Material im Schlicker kann bspw. Aluminiumoxid, Cordierit, Mullit, Siliziumcarbid und dgl. verwendet werden. Es ist auch möglich, die Keramikpluggingmasse nach dem Tränken mit Keramikschlicker in die freien Kanäle einzufüllen. Die Keramikpluggingmasse wird in diesem Fall etwas unterhalb der PU-Dichtspur eingebracht, da die zu verschließenden Kanäle sehr dünne Wände (ca. 1mm) aufweisen. Bei dickeren Wänden ab ca. 1,5 mm (Papierstärke) kann man die nicht brennbare und die brennbare Dichtspur direkt nebeneinander aufbringen. Nach dem Tränken mit dem Keramikschlicker sind alle Strömungskanäle verschlossen, wie es in Fig. 2 gezeigt ist.

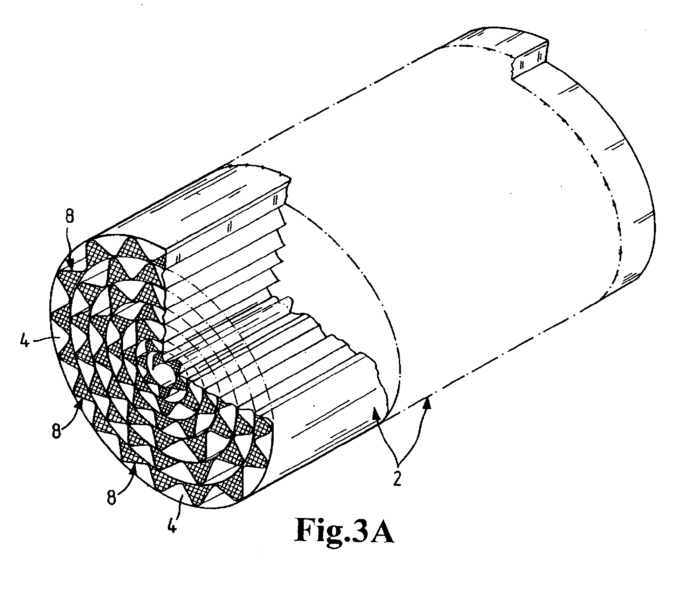

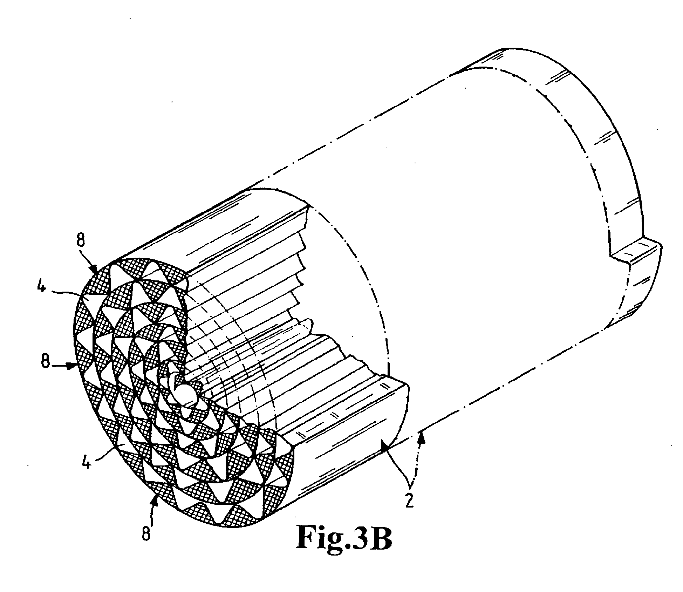

Nach dem Sintern bei ca. 500°C sind die brennbaren Dichtspuren und die nicht-keramische, brennbare Trägerbahn weggebrannt. Die mit Keramikpluggingmasse 8 gefüllten Kanäle bleiben dagegen erhalten und verschließen wechselseitig die Strömungskanäle. Diese Struktur ist in den Figuren 3A und 3B gezeigt (Ansichten: jeweils Vorder- und Rückseite des Wickelfilters 2).

Die brennbare(n) Dichtspur(en) 6 dienen somit als vorübergehender Verschluss der Strömungskanäle, damit beim Einbringen der Keramikpluggingmasse nicht die "falschen" Kanäle gefüllt werden.

Dieses Prinzip lässt sich überall dort anwenden, wo Hohlräume, Löcher oder dgl. entstehen sollen, die durch herkömmliche Herstellungsverfahren nicht bzw. nur auf kompliziertem Wege einzubringen sind, z.B. in keramischen Filterelementen, Dieselpartikelfiltern, Katalysatoren und auch in keramischen Bauteilen der herkömmlichen und einfachen Herstellungsart.

## Patentansprüche

1. Verfahren zur Herstellung eines keramischen Filterelements in einem Abgasfilter für Brennkraftmaschinen, bei dem eine brennbare, Strömungskanäle aufweisende nicht-keramische Trägerbahn mit einem keramischen Schlicker getränkt und anschließend in einer gewünschten geometrischen Form soweit ausgebrannt wird, bis die Trägerbahn verbrannt und ein starrer Filterkörper gebildet ist, **dadurch gekennzeichnet dass** vor dem Tränken mit dem keramischen Schlicker eine brennbare Dichtspur (6) derart auf die brennbare, nicht-keramische Trägerbahn aufgebracht wird, dass die Strömungskanäle wechselseitig durch die Dichtspur verschlossen werden und nach dem Aufbringen der Dichtspur (6) eine Keramikpluggingmasse (8) in die freien Strömungskanäle (4) eingebracht wird, wobei nach dem Sintern bei ca. 500°C die Dichtspur (6) und die nicht-keramische, brennbare Trägerbahn weggebrannt sind und die mit Keramikpluggingmasse (8) gefüllten Kanäle erhalten bleiben und die Strömungskanäle wechselseitig verschließen.

2. Verfahren nach Anspruch 1, **dadurch gekennzeichnet, dass** die brennbare Dichtspur (6) ausgewählt ist aus Polyurethan (PU), Silikon, Kautschuk, Silikonharzen, Polyethylenen und dgl.

3. Verfahren nach Anspruch 1 oder 2, **dadurch gekennzeichnet, dass** die brennbare Dichtspur (6) am äußeren Rand der nicht-keramischen Trägerbahn aufgebracht wird.

4. Verfahren nach Anspruch 1 oder 2, **dadurch gekennzeichnet, dass** weitere brennbare Dichtspuren (6) im Innern der nicht-keramischen Trägerbahn aufgebracht werden.

5. Verfahren nach einem der vorstehenden Ansprüche, **dadurch gekennzeichnet, dass** die brennbare, nicht-keramische Trägerbahn aus zwei übereinander liegenden Trägerbahnen gebildet wird, wobei mindestens eine Trägerbahn in der Weise vorgeformt ist, dass Strömungskanäle gebildet sind, und dass die brennbare Dichtspur (6) wechselseitig auf gegenüberliegenden Seiten der beiden Trägerbahnen aufgebracht wird.

6. Verfahren nach einem der vorstehenden Ansprüche, **dadurch gekennzeichnet, dass** die brennbare Dichtspur (6) eine Breite von 3 bis 10 mm, vorzugsweise 3 bis 5 mm, aufweiset.

7. Verfahren nach einem der vorstehenden Ansprüche, **dadurch gekennzeichnet, dass** die brennbare, nicht-keramische Trägerbahn zu einem zylindrischen Filterkörper (2) aufgewickelt ist, und die brennbare Dichtspur (6) durchgängig vom Wickelanfang bis zum Wickelende reicht.

8. Verwendung eines keramischen Filterelements nach wenigstens einem der Ansprüche 1 bis 7 als wechselseitig verschlossener Dieselpartikelfilter.

## Claims

1. Method for manufacturing a ceramic filter element in an exhaust gas filter for internal combustion engines, in which a combustible carrier layer featuring non-ceramic flow channels is soaked with a ceramic slip and then burned into a desired geometrical shape until the carrier layer is burned up and a rigid filter body is formed, **characterized in that** before soaking with the ceramic slip a combustible seal strip (6) is applied to the combustible non-ceramic carrier layer such that the flow channels are closed alternately by the seal strip and that after having applied the seal strip (6) a ceramic plugging mass (8) is inserted into the free flow channels (4), wherein after sintering at approx. 500 °C the seal strip (6) and the non-ceramic combustible carrier layer are burned away and the channels filled with ceramic plugging mass (8) remain and close the flow channels alternately.

2. Method according to claim 1, **characterized in that** the combustible seal strip (6) is selected from polyurethane (PU), silicone, rubber, silicone resins, polyethylenes, and the like.

3. Method according to claim 1 or 2, **characterized in that** the combustible seal strip (6) is applied at the outer edge of the non-ceramic carrier layer.

4. Method according to claim 1 or 2, **characterized in that** other combustible seal strips (6) are applied inside of the non-ceramic carrier layer.

5. Method according to one of the above claims, **characterized in that** the combustible non-ceramic carrier layer is formed of two carrier layers placed one above the other, at least one carrier layer being formed such that flow channels are formed and that the combustible seal strip (6) is applied alternately on opposing sides of the two carrier layers.

6. Method according to one of the above claims, **characterized in that** the combustible seal strip (6) features a width of 3 to 10 mm, preferably 3 to 5 mm.

7. Method according to one of the above claims, **characterized in that** the combustible non-ceramic carrier layer is coiled-up to form a cylindrical filter body (2) and that the combustible seal strip (6) extends completely from the beginning of the coil to the end of the coil.

8. Utilization of a ceramic filter element according to at least one of the claims 1 to 7 as alternately closed diesel particulate filter.

## Revendications

1. Procédé de fabrication d'un élément filtrant céramique dans un filtre à gaz d'échappement pour moteurs à combustion interne dans lequel une bande de support inflammable, non céramique et dotée de canaux d'écoulement est imprégnée d'une barbotine céramique puis cuite dans un moule ayant la forme géométrique souhaitée jusqu'à ce que la bande de support soit cuite et qu'il se forme un corps de filtre rigide, **caractérisé en ce que**, avant l'imprégnation de barbotine céramique, un cordon d'étanchéité (6) inflammable soit appliqué sur la bande de support non céramique et inflammable de sorte que les canaux d'écoulement soient obturés en alternance par le cordon d'étanchéité et qu'après l'application du cordon d'étanchéité (6), une masse de bouchage céramique (8) soit introduite dans les canaux d'écoulement (4) libres, le cordon d'étanchéité (6) et la bande de support non céramique et inflammable étant éliminés par cuisson après le frittage à env.500° C et les canaux remplis de masse de bouchage céramique (8) restant intacts et obturant en alternance les canaux d'écoulement.

2. Procédé selon la revendication 1, **caractérisé en ce que** le cordon d'étanchéité (6) inflammable est réalisé en polyuréthane (PU), silicone, caoutchouc, résines de silicones, polyéthylène ou dans un autre matériau comparable.

3. Procédé selon la revendication 1 ou 2, **caractérisé en ce que** le cordon d'étanchéité (6) inflammable est appliqué sur le bord extérieur de la bande de support non céramique.

4. Procédé selon la revendication 1 ou 2, **caractérisé en ce que** d'autres cordons d'étanchéité (6) inflammables sont appliqués à l'intérieur de la bande de support non céramique.

5. Procédé selon l'une des revendications précédentes, **caractérisé en ce que** la bande de support inflammable et non céramique est constituée de deux bandes de support superposées, au moins une bande de support étant préformée de sorte à ce que des canaux d'écoulement soient formés, et **en ce que** le cordon d'étanchéité (6) inflammable est appliqué en alternance sur les côtés opposés des deux bandes de support.

6. Procédé selon l'une des revendications précédentes, **caractérisé en ce que** le cordon d'étanchéité (6) inflammable a une largeur de 3 à 10 mm, de préférence de 3 à 5 mm.

7. Procédé selon l'une des revendications précédentes, **caractérisé en ce que** la bande de support inflammable et non céramique est embobinée pour former un corps de filtre (2) cylindrique, et **en ce que** le cordon d'étanchéité (6) inflammable s'étend totalement du début de la bobine à la fin de la bobine.

8. Utilisation d'un élément filtrant céramique selon au moins l'une des revendications 1 à 7 en tant que filtre à particules diesel obturé en alternance.
